# FASCICULE DE BREVET EUROPEEN

(11) **EP 1 104 532 B1**
(45) Date de publication et mention de la délivrance du brevet: **22.05.2002**
(21) Numéro de dépôt: 99939480.2
(22) Date de dépôt: 12.08.1999
(51) Int. Cl.: F16L 55/172

(54) **DISPOSITIF DE COLMATAGE DE FUITE DANS UNE CANALISATION**
VORRICHTUNG ZUR ABDICHTUNG EINE LECKAGE IN EINER ROHRLEITUNG
DEVICE FOR STOPPING A LEAK IN A PIPE

(30) Priorité: 12.08.1998 FR 9810531
(43) Date de publication de la demande: 06.06.2001
(73) Titulaire: 3X Engineering, 98000 Monaco (MC); SUBMIN LIMITED, Dublin 2 (IE)
(72) Inventeur: BOULET D'AURIA, Stanislas, F-06320 Cap d'Ail (FR)
(74) Mandataire: Bonneau, Gérard
(86) Numéro de dépôt international: FR9901982
(87) Numéro de publication internationale: WO0009936

(56) Documents cités:
- EP-A- 0 079 457
- DE-U- 8 914 186
- GB-A- 2 072 790
- US-A- 2 776 153
- US-A- 4 606 377

## Description

### Domaine de la technique

La présente invention concerne la réparation de canalisations de transport d'eau, de gaz et d'autres fluides, et en particulier un dispositif de colmatage de fuite dans une canalisation.

### Etat de la technique

La réparation d'une canalisation d'eau ou de gaz présentant une fuite peut se faire par différentes techniques.

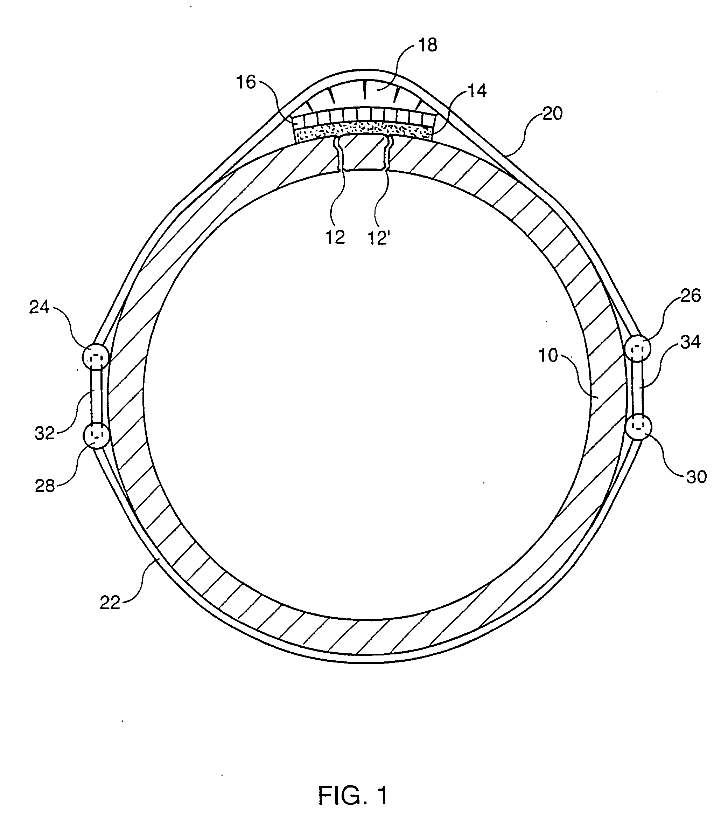

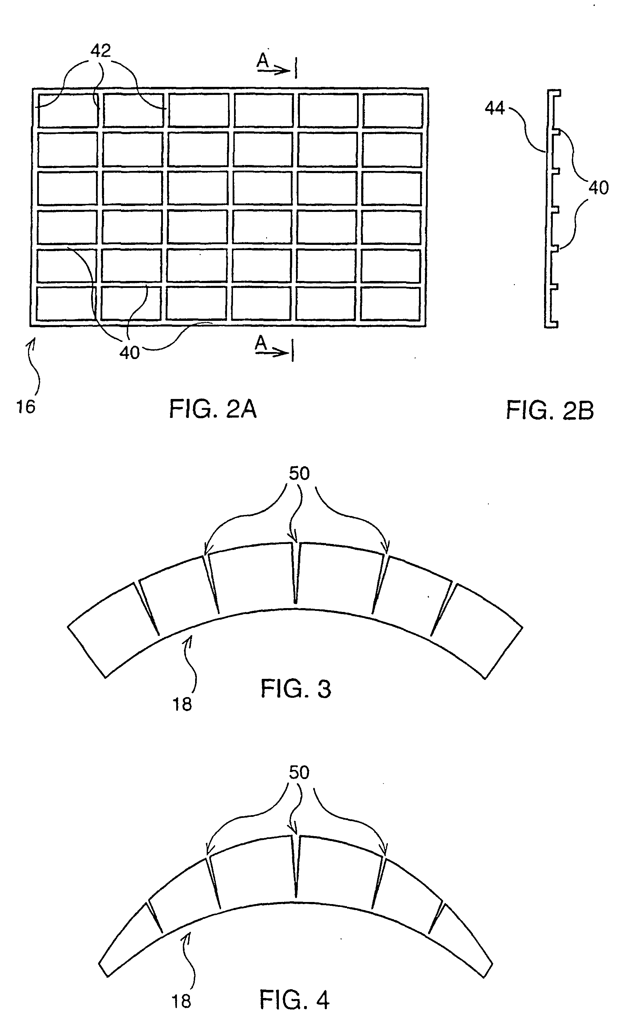

Le document US 4 606 377 A décrit un dispositif comportant un mécanisme de serrage (fig. 1), un applicateur de force (15, fig.4) et une plaque d'élastomère (67, fig.3).

Le document DE 8 914 186 U mentionne une grille intégrée au matériau appliqué sur la conduite, mais cette grille n'a pas pour fonction de transmettre un effort de pression.

Le document US 2 776 153 A quant à lui, révèle que différents motifs peuvent être utilisés pour le relief de la plaque d'élastomère (col.2, lignes 5-10). Un tel relief permet une meilleure application de la plaque d'élastomère sur la canalisation.

Cette derniére technique consiste à colmater la fuite par l'application d'un élastomère sur les fissures de la canalisation au moyen d'un manchon. Un tel manchon est formé de deux demi-coquilles dont la paroi intérieure est en élastomère et adaptées pour entourer la canalisation à l'endroit des fissures. Les demi-coquilles sont fixées entre elles et serrées sur la canalisation par des tiges filetées ou autres moyens.

Malheureusement le colmatage des fuites par ce type de manchon présente de nombreux inconvénients. Il faut en effet serrer le manchon en appliquant une force considérable de manière à ce que l'élastomère applique une pression supérieure à la pression du fluide à l'intérieur de la canalisation qui peut atteindre parfois jusqu'à 100 bars. Les deux demi-coquilles formant le manchon sont généralement en acier et donc d'un poids important et d'un coût élevé. La mise en oeuvre est délicate et fastidieuse d'une durée pouvant atteindre 7 à 8 heures. En outre, l'application d'une force de serrage importante peut quelquefois créer de nouvelles fissures si la mise en oeuvre est mal faite. Enfin, les demi-coquilles utilisées pour former le manchon sont adaptées à un diamètre déterminé de canalisation, et il faut donc prévoir des coquilles ayant autant de diamètres différents qu'il y a de diamètres différents de canalisations.

### Exposé de l'invention

C'est pourquoi le but de l'invention est de fournir un dispositif de colmatage de fuite dans une canalisation qui soit rapide à mettre en oeuvre et ne nécessite pas une force de serrage considérable.

Un autre but de l'invention est de fournir un dispositif de colmatage de fuite dans 'une canalisation qui soit léger, peu coûteux et pouvant être adapté à des canalisations de diamètres différents.

L'objet de l'invention est donc un dispositif de colmatage de fuite dans une canalisation présentant au moins une fissure comprenant un élastomère appliqué contre la fissure par un applicateur de force et un mécanisme de serrage disposé autour de la canalisation et destiné à exercer une pression sur l'applicateur de force lorsque le mécanisme de serrage est serré autour de la canalisation. L'invention est caractérisée en ce que l'applicateur de force comprend des éléments de cisaillement disposés radialement par rapport à la canalisation et appliquant des forces de cisaillement sur l'élastomère à l'endroit de la fissure, obligeant l'élastomère à se déformer de manière à ce qu'il épouse la forme de la fissure et colmate ainsi la fuite.

### Brève description des dessins

Les buts, objets et autres caractéristiques de l'invention apparaîtront plus clairement à la lecture de la description qui suit faite en référence aux dessins dans lesquels :
- la figure 1 représente une canalisation présentant des fissures sur laquelle est installé le dispositif de colmatage de fuite selon l'invention,
- la figure 2A représente une vue de dessous de l'applicateur de forces faisant partie du dispositif de colmatage de fuite selon l'invention,
- la figure 2B est une vue en coupe de l'applicateur de forces représenté sur la figure 2A,
- la figure 3 représente une vue en coupe d'un premier répartiteur de forces pouvant être utilisé dans le dispositif de colmatage de fuite selon l'invention, et
- la figure 4 représente une vue en coupe d'un second répartiteur de forces pouvant être utilisé dans le dispositif de colmatage de fuite selon l'invention.

### Description détaillée de l'invention

Sur la figure 1 est représentée une canalisation 10 vue en coupe destinée à transporter un fluide tel qu'un liquide ou un gaz, et présentant des fissures 12 et 12' dans sa partie supérieure. Sur les fissures, on a placé une plaque d'élastomère 14 incompressible et ayant une bonne résistance au fluage tel que du caoutchouc ou du néoprène, d'une épaisseur comprise entre 0,3 et 3cm, destinée à colmater la fuite en pénétrant par pression dans la partie supérieure des fissures. Au dessus de la plaque d'élastomère 14 se trouve un applicateur de forces 16 ayant des dimensions approximativement égales à celles de la plaque d'élastomère 14 et destiné à appliquer des forces de cisaillement à la plaque d'élastomère. Au dessus de l'applicateur de forces 16, on a placé un répartiteur de forces 18 destiné à répartir les forces de serrage provenant du serrage d'une ceinture de serrage composée ici de deux portions de sangle 20 et 22. Chaque portion de sangle s'étend entre deux tiges d'extrémité. Ainsi, la portion de sangle 20 comporte les deux tiges d'extrémité 24 et 26 alors que la portion de sangle 22 comporte les deux tiges d'extrémité 28 et 30. Les tiges d'extrémité 24 et 28 sont reliées par une tige filetée 32 et les tiges d'extrémité 26 et 30 sont reliées par une tige filetée 34. En effectuant la rotation des tiges filetées, celles-ci sont introduites progressivement dans des alésages des tiges d'extrémité des portions de sangle et provoquent le serrage de la sangle formée des deux portion autour de la canalisation 10. Au fur et à mesure du serrage, des forces de cisaillement sont appliquées à la plaque d'élastomère 14 qui vient ainsi colmater les fissures 12 et 12'.

L'applicateur de forces 16 est illustré sur les figures 2A et 2B représentant respectivement une vue de dessous de l'applicateur et une vue en coupe selon A-A dudit applicateur. Cet applicateur 16 se présente, dans le mode de réalisation préféré, sous forme d'un treillis composé d'un premier groupe de cloisons parallèles 40 disposées horizontalement sur la figure et d'un deuxième groupe de cloisons parallèles 42 disposées verticalement sur la figure, les cloisons des deux groupes étant perpendiculaires entre elles et solidaires d'un support ou fond 44.

Dans le mode de réalisation préféré, l'applicateur 16 à la forme d'une plaque rectangulaire de 100mm x 50mm avec des cloisons d'une profondeur de 2mm et d'une épaisseur inférieure à 1mm. Le matériau utilisé de préférence est une matière plastique rigide mais déformable telle que du polyamide, du polypropylène ou du polycarbonate, ou est en métal présentant la même caractéristique de déformabilité notamment en aluminium. La déformabilité de l'applicateur de forces 16 permet ainsi d'utiliser le même applicateur quel que soit le diamètre de la canalisation à colmater.

On doit noter que selon des variantes du mode de réalisation préféré, l'applicateur 16 pourrait être dépourvu de support ou fond 44 et les cloisons 40 et 42 pourraient se présenter différemment, c'est à dire ne pas forcément être parallèles et/ou perpendiculaires entre elles. En outre, l'applicateur peut avoir une forme quelconque, triangulaire, rectangulaire, hexagonale ...

Quelle que soit la disposition des cloisons 40 et 42, une caractéristique essentielle est qu'elles soient perpendiculaires à la surface de la canalisation lorsque l'applicateur 16 a été disposé sur la plaque d'élastomère 14 comme illustré sur la figure 1, c'est à dire de façon à appliquer des forces de cisaillement à l'élastomère.

Le répartiteur de forces 18 illustré sur la figure 3 est une plaque de dimensions approximativement égales à celles de l'applicateur 16 mais d'une épaisseur plus importante comprise entre 0,5cm et 4cm, l'épaisseur étant plutôt faible pour une canalisation de faible diamètre et importante (par exemple 4cm) pour une canalisation de gros diamètre. Dans le mode de réalisation de la figure 3, il a une épaisseur constante, et comporte des fentes 50. La présence des fentes permet, par leur ouverture lors du serrage d'adapter le répartiteur de forces 18 à des canalisations de différents diamètres. Le répartiteur 18 est de préférence en matière plastique telle que du polyamide, polypropylène ou du polycarbonate. Le répartiteur 18 a pour but de bien répartir les forces de serrage sur l'applicateur de forces 16.

Selon une variante, le répartiteur de forces peut avoir la forme illustrée sur la figure 4. Dans cette variante il présente une épaisseur variable qui va en diminuant du centre vers les extrémités, par exemple de 2cm à 1cm.

Bien qu'il ne soit pas indispensable, le répartiteur de forces 18 améliore grandement l'efficacité du dispositif de colmatage selon l'invention, principalement lorsqu'il se présente selon la figure 4. Le répartiteur permet en effet de convertir les efforts orthoradiaux en efforts radiaux de compression, la courbure du répartiteur s'ajoutant à celle de la canalisation. La tension n'est plus dans ce cas, tangente à la surface du système comme on peut s'en rendre compte sur la figure 1. La courbure plus importante permet de transmettre la composante radiale de la force de tension. Le répartiteur permet donc de récupérer les efforts sur toute la longueur de l'applicateur de forces et non pas seulement aux extrémités. De plus, on obtient ainsi un gradient de forces croissant du centre vers les extrémités, ce qui résulte en un effort maximal concentré sur la fuite.

Ainsi, pour une même force de serrage permettant d'appliquer une pression de 20 bars si on ne met que l'applicateur de forces 16 sans le répartiteur de forces 18, cette pression passe à plus de 35 bars en mettant un répartiteur d'épaisseur constante selon la figure 3 et à plus de 50 bars en mettant un répartiteur d'épaisseur variable selon la figure 4. En outre, que le répartiteur de forces soit d'épaisseur constante ou variable, on a constaté qu'une augmentation de l'épaisseur en particulier au milieu dans le cas d'une épaisseur variable et donc un éloignement de la ceinture de serrage par rapport à la canalisation, permet d'obtenir une pression de serrage plus importante pouvant aller jusqu'à 100 bars.

De façon générale, le principe de l'invention consiste à appliquer une force de serrage relativement faible grâce à un mode de compression particulier d'un élastomère incompressible et présentant une bonne résistance au fluage. Pour ce faire, l'élastomère est sollicité dans son mode le plus souple, c'est à dire en cisaillement, au moyen de l'applicateur de forces et de ses cloisons perpendiculaires à la surface de la canalisation.

Bien que la description ci-dessus présente un mode de réalisation préféré de l'invention, il est clair que des modifications peuvent y être apportées sans sortir du cadre de l'invention. Ainsi, tout mécanisme de serrage tel que défini dans les revendications peut être utilisé pour mettre en oeuvre l'invention, comme par exemple un câble en acier souple de faible diamètre. Cependant l'utilisation de sangles (illustrée sur la figure 1) et de façon générale de plusieurs portions de sangle reliées entre elles par des moyens de serrage appropriés rapprochant les extrémités des portions de sangle entre elles lors du serrage (ces moyens de serrage pouvant être notamment des tiges filetées comme décrit dans le mode de réalisation préféré), est un système qui permet de s'adapter à tous les diamètres de canalisation, chaque canalisation pouvant exiger d'utiliser 1, 2, 3 ... portions de sangle identiques reliées entre elles. En outre, il est judicieux que les portions qui composent la sangle soient dans une gaine de sorte qu'une partie de l'effort de serrage ne soit pas absorbé par les forces de frottement comme c'est le cas lorsque la sangle frotte directement sur la canalisation durant le serrage.

## Revendications

1. Dispositif de colmatage de fuite dans une canalisation présentant au moins une fissure (12, 12'), comprenant une plaque d'élastomère (14) appliquée contre la fissure par un applicateur de forces (16) et un mécanisme de serrage (20, 22) disposé autour de la canalisation pour appliquer une force sur ledit applicateur de forces ;
ledit dispositif étant **caractérisé en ce que** ledit applicateur de forces comprend des éléments de cisaillement (40, 42) disposés perpendiculairement à la canalisation et appliquant des forces de cisaillement sur ladite plaque d'élastomère à l'endroit de la fissure obligeant l'élastomère à se déformer de façon à épouser la forme de la fissure et ainsi la colmater.

2. Dispositif selon la revendication 1, dans lequel ledit applicateur de forces (16) est principalement composé d'un treillis d'éléments de cisaillement constitué par un premier groupe de cloisons rigides parallèles (40) et un deuxième groupe de cloisons rigides parallèles (42) disposées perpendiculairement aux cloisons dudit premier groupe.

3. Dispositif selon la revendication 2, dans lequel ledit applicateur de forces (16) est une plaque en forme de rectangle constituée de premières cloisons (40) parallèles à l'un des côtés du rectangle et de secondes cloisons parallèles (42) à l'autre côté du rectangle et solidaires desdites premières cloisons.

4. Dispositif selon la revendication 1, 2 ou 3, dans lequel ledit applicateur de forces (16) est en matière plastique rigide mais déformable de façon à s'adapter à des canalisations de diamètres différents.

5. Dispositif selon l'une des revendications 1 à 4, comprenant en outre un répartiteur de forces (18) placé entre ledit applicateur de forces (16) et ledit mécanisme de serrage (20, 22) et destiné à répartir les forces de serrage sur ledit applicateur de forces.

6. Dispositif selon la revendication 5, dans lequel ledit répartiteur de forces (18) est une plaque en matière plastique déformable comportant des fentes (50) dans sa partie supérieure destinées à adapter ledit répartiteur de forces à des canalisations de diamètres différents.

7. Dispositif selon la revendication 6, dans lequel ledit répartiteur de forces (18) a un épaisseur constante comprise entre 0.5cm et 4cm.

8. Dispositif selon la revendication 6, dans lequel ledit répartiteur de forces (18) a une épaisseur variable qui va en diminuant du centre vers les extrémités.

9. Dispositif selon l'une quelconque des revendications 1 à 8, dans lequel ledit mécanisme de serrage est une sangle constituée d'au moins deux portions de sangle (20, 22) reliées entre elles de manière à pouvoir s'adapter à des canalisations de diamètres différents.

10. Dispositif selon la revendication 9, dans lequel lesdites portions de sangle (20, 22) sont placées dans des gaines de façon à empêcher qu'une partie de l'effort de serrage soit absorbé par les forces de frottement.

## Claims

1. A device for stopping a leak in a pipe having at least one crack (12, 12'), comprising an elastomer sheet (14) applied against the crack by a force applicator (16) and a clamping mechanism (20, 22) arranged around the pipe for applying a force on said force applicator;
said device being **characterized in that** said force applicator is comprised of shearing elements (40, 42) arranged perpendicularly to the pipe and applying shear forces on said elastomer sheet on the location of crack, forcing the elastomer to be deformed so as to match the shape of the crack, thereby blocking it.

2. The device according to claim 1, in which said force applicator (16) is mainly comprised of a lattice of shearing elements comprised of a first group of rigid parallel partitions (40) and a second group of parallel partitions (42) arranged perpendicularly to the partitions of said first group.

3. The device according to claim 2, wherein said force applicator (16) is a rectangular-shaped sheet comprised of a first set of partitions (40) parallel to one of the sides of the rectangle and a second set of partitions (42) parallel to the other side of the rectangle and integral with said first set of partitions.

4. The device according to claims 1, 2 or 3, wherein said force applicator (16) is made of rigid, although deformable, plastic material so as to be able to adapt to pipes of different diameters.

5. The device according to any of claims 1 to 4, further including a force distributor (18) placed between said force applicator (16) and said clamping mechanism (20, 22) and designed to distribute the clamping forces onto said force applicator.

6. The device according to claim 5, wherein said force distributor (18) is a sheet made of deformable plastic material having grooves (50) in its upper part designed to adapt said force distributor to pipes of different diameters.

7. The device according to claim 6, in which said force distributor (18) has a constant thickness between 0.5cm and 4cm.

8. The device according to claim 6, in which said force distributor (18) has a variable thickness which decreases from the center outward to the ends.

9. The device according to any one of claims 1 to 8, wherein said clamping mechanism is a strap comprised of at least two strap portions (20, 22) inter-connected so as to adapt to pipes of different diameters.

10. The device according to claim 9, wherein said strap portions (20, 22) are placed in sleeves so as to prevent part of the clamping force from being absorbed by friction forces.

## Patentansprüche

1. Vorrichtung zum Abdichten von Lecks in einer Rohrleitung, die mindestens einen Riss (12, 12') aufweist, bestehend aus einer Elastomerplatte (14), die durch ein Kraftausübungsmittel (16) an den Riss angedrückt wird, und einem Spannmechanismus (20, 22), der um die Rohrleitung herum angeordnet ist, um auf das Kraftausübungsmittel eine Kraft auszuüben,
**dadurch gekennzeichnet, dass** das Kraftausübungsmittel Scherelemente (40, 42) aufweist, die senkrecht zu der Rohrleitung angeordnet sind und auf die Elastomerplatte an der Stelle des Risses Scherkräfte ausüben, die das Elastomer zwingen, sich so zu verformen, dass es sich an die Form des Risses anschmiegt und ihn auf diese Weise abdichtet.

2. Vorrichtung nach Anspruch 1, bei der das Kraftausübungsmittel (16) im wesentlichen aus einem Gitter von Scherelementen besteht, das aus einer ersten Gruppe von starren parallelen Wänden (40) und einer zweiten Gruppe von starren parallelen Wänden (42) besteht, die zu den Wänden der ersten Gruppe senkrecht angeordnet sind.

3. Vorrichtung nach Anspruch 2, bei der das Kraftausübungsmittel (16) eine Platte in Form eines Rechtecks ist, die aus ersten Wänden (40) besteht, die zu einer der Seiten des Rechtecks parallel sind, sowie aus zweiten Wänden (42), die zu der anderen Seite des Rechtecks parallel sind und mit den ersten Wänden fest verbunden sind.

4. Vorrichtung nach Anspruch 1, 2 oder 3, bei der das Kraftausübungsmittel (16) aus einem starren, aber verformbaren Kunststoff besteht, so dass es sich an Rohrleitungen mit verschiedenen Durchmessern anpasst.

5. Vorrichtung nach einem der Ansprüche 1 bis 4, die ferner einen zwischen dem Kraftausübungsmittel (16) und dem Spannmechanismus (20, 22) angeordneten Kraftverteiler (18) aufweist, der dazu bestimmt ist, die Spannkräfte auf das Kraftausübungsmittel zu verteilen.

6. Vorrichtung nach Anspruch 5, bei der der Kraftverteiler (18) eine Platte aus verformbarem Kunststoff ist, die in ihrem oberen Teil Schlitze (50) aufweist, die dazu bestimmt sind, den Kraftverteiler an Rohrleitungen mit verschiedenen Durchmessern anzupassen.

7. Vorrichtung nach Anspruch 6, bei der der Kraftverteiler (18) eine konstante Dicke von 0,5 cm bis 4 cm besitzt.

8. Vorrichtung nach Anspruch 6, bei der der Kraftverteiler (18) eine sich ändernde Dicke besitzt, die von der Mitte zu den Enden abnimmt.

9. Vorrichtung nach einem der Ansprüche 1 bis 8, bei der der Spannmechanismus ein Gurt ist, der aus mindestens zwei Gurtstücken (20, 22) besteht, die so miteinander verbunden sind, dass sie sich an Rohrleitungen mit verschiedenen Durchmessern anpassen können.

10. Vorrichtung nach Anspruch 9, bei der die Gurtstücke (20, 22) in Hüllen angeordnet sind, so dass verhindert wird, dass ein Teil der Spannkraft von den Reibungskräften absorbiert wird.
